**Europäisches Patentamt**

**European Patent Office**

**Office européen des brevets**

(19)

(11) Publication number: **0 111 420**
**B1**

(12)

# EUROPEAN PATENT SPECIFICATION

(45) Date of publication of patent specification: **01.10.86**

(51) Int. Cl.⁴: **A 23 C 11/10**, A 23 L 1/36

(21) Application number: **83307420.6**

(22) Date of filing: **06.12.83**

(54) **Sunflower seed milk product and its preparation.**

(30) Priority: **06.12.82 JP 213778/82**
**06.12.82 JP 213779/82**

(43) Date of publication of application:
**20.06.84 Bulletin 84/25**

(45) Publication of the grant of the patent:
**01.10.86 Bulletin 86/40**

(84) Designated Contracting States:
**BE CH DE FR GB IT LI NL**

(56) References cited:
**EP-A-0 081 705**
**US-A-1 332 562**
**US-A-4 066 792**

**CHEMICAL ABSTRACTS, vol. 95, no. 9, October 1981, page 517, no. 148929s, Columbus, Ohio, US;**

**JOURNAL OF SCIENCE OF FOOD & AGRICULTURE, vol. 30, no. 10, October 1979, pages 974-980, Society of Chemical Industry; C.E.M. FERBER et al.: "Factors involved in the preparation of sunflower milk"**

(73) Proprietor: **SUMITOMO CHEMICAL COMPANY, LIMITED**
**15 Kitahama 5-chome Higashi-ku**
**Osaka-shi Osaka 541 (JP)**

(72) Inventor: **Fujisawa, Koichi**
**6-17 Honmachi 9-chome**
**Toyonaka Osaka-fu (JP)**
Inventor: **Yokoyama, Akiko**
**18-1 Tamagawa 1-chome**
**Takatsuki Osaka-fu (JP)**
Inventor: **Suzukamo, Gohfu**
**2-1-216 Kuwatacho**
**Ibaraki Osaka-fu (JP)**

(74) Representative: **Geering, Keith Edwin et al**
**REDDIE & GROSE 16 Theobalds Road**
**London WC1X 8PL (GB)**

Courier Press, Leamington Spa, England.

## Description

The present invention relates to sunflower seed milk products and their preparation.

Sunflower seed is an oil seed with the second largest output in the world; its world output in the 1978/79 agricultural year is said to be about 13,000,000 tonnes [Yushi (Oil and Fat), Vo. 33, 54]. Heretofore, of the constituents of sunflower seed, the oil alone has been used for human consumption; other constituents, proteins and glucosides, have only been used in animal feedstuffs. The world-wide shortage of protein makes necessary the effective use of under exploited protein resources.

Also, in recent years, the importance of vegetable proteins and fats for health and the prevention of diseases in adult people has been recognized. As a result, emulsified drinks using soybean have recently been developed, but they are not always satisfactory in terms of tastiness or their effect on health.

Our European Application No. 83302257.7 (No. 0092443) describes the production of sunflower seed milk, which has advantages as a vegetable seed milk drink in that: it has no grassy smell, unlike soy milk; it has a high content of linoleic acid as well as of α-tocopherol which is of high physiological activity; and its ratio of α-tocopherol content to linoleic acid content is so high as to tend to prevent peroxylipids.

In general, addition of acidic drinks or organic acids to sunflower seek milk reduces its pH with coagulation of its proteins, and in the vicinity of the protein isoelectric point deposition of protein becomes so marked that the value of the milk as a food and drink is lost.

We have found that lactic acid fermented sunflower seed milk obtained by lactic acid fermentation of sunflower seed milk is useful as a food and drink of good taste and stability, and that it can. be mixed with acidic drinks and/or organic acids without deposit formation to yield imitation acidic dairy desserts and drinks of similar usefulness as food and drink.

The fermented sunflower seed milk according to the invention is obtainable by inoculating sunflower seed milk with lactic acid bacteria to carry out lactic acid fermentation; if necessary, a stabilizer or gelling agent may be added thereto. The resulting lactic acid fermented sunflower seed milk may further be mixed with acidic drink and/or organic acid, and if necessary, a stabilizer or gelling agent may be added. If the resulting mixture is homogenized on a high-pressure homogenizer or the like, drinks having a smoother taste are obtained. Further, fruit flesh and pulp, etc. may be added according to taste.

When the lactic acid fermented sunflower seed milk is to be used as a drink, it is preferably adjusted to a suitable viscosity or fluidity for drinking by addition of water.

In these ways, sunflower seed milk products of distinctive flavour and good taste and stability can be produced. Optionally heat-treatment is applied to these products to yield pasteurised desserts and drinks.

The starting material for the fermented product of the present invention is vegetable seed milk obtained from sunflower seed alone or from sunflower and other oil seeds, and may contain added milk protein. The vegetable seed milk may be produced by applying pulverization treatment such as grinding to the seed, for example as disclosed in our European Application No. 83302257.7 (No. 0092443); preferably the vegetable seed milk is obtained by pulverizing the seed in the presence of water and heat-treating the resulting slurry at a temperature above 65°C up to the boiling point with stirring while adjusting the pH of the slurry to from 6.5 to 7.5, followed by applying pulverization treatment again.

As oil seed in addition to sunflower seed, one or more of for example soybean, peanut, pine nut, sesame, cacao bean and the like may be used according to taste; it is preferred to use at least 20 wt.% of sunflower seed.

The mixed vegetable seed milk may for example be obtained by pulverizing (e.g. grinding) in water a mixture of the sunflower and other oil seeds or by mixing the seed milks obtained separately from the different seeds.

When milk protein is added to the vegetable seed milk, it preferably amounts to not more than 15% based on the vegetable seed milk. Addition of milk protein not only increases the protein content of the product but also discourages sedimentation of its constituents to make the curd obtained therefrom by fermentation more uniform and finer in texture.

The term "milk protein" referred to herein means a substance containing proteins present in milk, and it includes milk, dairy products and substances or compositions containing proteins extracted therefrom. As milk, for example cow's milk, goat's milk and the like may be used according to taste, but cow's milk is preferred in that it is available abundantly and stably. As dairy products, for example skim milk, concentrated milk, whole milk powder, skim milk powder, whey and the like may be used. Further, substances or compositions containing proteins extracted from milk or dairy products include for example casein and its potassium, sodium and calcium salts; compositions containing these; lactalbumin and the like.

The lactic acid bacteria used are not critical, any of the conventionally used ones being suitable. Preferably, however, one or more of *Lactobacillus acidophilus*, *Lactobacillus bulgaricus*, *Streptococcus thermophilus* and *Streptococcus lactis* is used.

The method of lactic acid fermentation is well known, and the usual methods may be applied. A preferred fermentation condition is a period of 3 to 20 hours at 35° to 50°C, more preferably a period of 4 to 16 hours at 35°C to 50°C. Ripening may be effected at not higher than 10°C after completion of fermentation.

In the fermentation, various sugars, honey, skim milk powder, etc. may be added to promote fermentation, but this is not always necessary.

As the acidic drinks, various fruit juices, coffee, etc. may be used according to taste. As examples of fruit juice, orange, lemon, grapefruit, pineapple, strawberry and the like may be used alone or in mixtures of two or more of them. The form of the acidic drink is not critical, and fresh fruit juices, powdered ones, etc. may be used as desired.

The amount of acidic drink added is not critical. When there is to be emphasis on the flavour of lactic acid fermented sunflower seed milk, the amount of fruit juice added may be, for example, about 5 to about 20%; when there is a wish to emphasize the fruit juice flavour, 60 to 80% of the fruit juice may for example be added.

Also, in adding an organic acid, its kind and amount are not critical; for example citric acid, malic acid, lactic acid, etc. may be added according to taste.

As a gelling agent or stabilizer, for example one or more of pectin, agar, carrageenan and gelatin may be used. The amount thereof added varies depending upon whether drinks or yoghourt-like foods are desired. In the case of pectin, for example, its amount for drink products is 0.1 to 1%, amounts beyond 1% yielding yoghourt-like foods.

By adding a gelling agent or stabilizer, drinks of good stability and imitation yoghourt having a high gel strength and good retention can be obtained. Perfuming agents, coloring agents, sweetening agents and other commonly used additives may be added according to taste.

The present invention is illustrated in more detail by the following Reference Example and by Examples 1 to 4 according to the invention.

Reference example

Sixty grams of a hull-free (dehulled) sunflower seed was soaked for 5 minutes in 300 g of boiling water, followed by draining. The soaked seed was twice treated on a wet-type pulverizer while adding 540 g of water containing 0.2% of sodium ascobate and 0.4% of nutrose (Sodium caseinate). The pH of the resulting slurry was adjusted to 7.0 with 1N-NaHCO$_3$ while maintaining the slurry at 80°C. for 10 minutes with stirring. Thereafter, the slurry was further pulverized on a wet-type pulverizer and a high-pressure homogeniser, centrifuged to remove insoluble solid matters, and after heat pasteurization, homogenised to obtain a sunflower seed milk.

Example 1

Five grams of honey was added to 500 g of this pasteurized sunflower seed milk which was then inoculated with a mixture of *Lactobacillus bulgaricus* and *Streptococcus thermophilus*. Fermentation was then carried out at 45°C for 6 hours to obtain lactic acid fermentation curd. The lactic acid fermented sunflower seed milk thus obtained has a distinct flavour and excellent tastiness.

Example 2

350 grams of lactic acid fermented sunflower seed milk obtained as in Example 1 was added with stirring to 1070 g of water (10°C) in which 10 g of pectin, 100 g of granulated sugar and 25 g of honey were previously dissolved. Thereafter, the mixture was homogenized by means of a high-pressure homogenizer and pasteurized.

The drink obtained was of good taste and stability.

Example 3

Five grams of honey and 1 g of skim milk powder were added to 500 g of sunflower seed milk which was then fermented at 45°C for 6 hours using a mixture of *Lactobacillus bulgaricus* and *Streptococcus thermophilus* to obtain lactic acid fermentation curd. Said curd was stored for 15 hours in a refrigerator at 5°C. 10 g of pectin, 100 g of granulated sugar, 25 g of honey and 5 g of citric acid were dispersed in 570 g of distilled water and thoroughly dissolved by heating to 80°C, followed by cooling to 10°C. Thereafter, 350 g of the fermentation curd of sunflower seed milk was added to said cooled pectin-containing solution with stirring, and 500 g of orange juice was further added thereto, followed by thorough stirring. The sour drink obtained was then pasteurized and homogenised on a high-pressure homogeniser to obtain the final product.

The product thus obtained had a distinct flavour and excellent taste and stability.

Example 4

Example 3 was repeated except that vegetable seed milk obtained from a 1:1 (by weight) mixture of sunflower seed and soybean was used in place of pure sunflower seed milk.

The milk product thus obtained had a distinct flavour and excellent taste and stability.

In the present invention, the various mentioned additives may be included before or after fermentation or both; this applies particularly to stabiliser or gelling agent; however acidic drink and/or organic acid is usually added after, and milk protein before, the fermentation of the vegetable seed milk.

**Claims**

1. A lactic acid bacteria-fermented sunflower seed milk.

2. A fermented milk product according to claim 1 including at least one additive selected from acidic drinks and organic acids.

3. A fermented milk product according to claim 1 or 2 including stabilizer or gelling agent, preferably selected from pectin, agar, carrageenan and gelatin.

4. A fermented milk product according to any preceding claim containing milk protein, preferably to a maximum of 15%.

5. A fermented milk product according to any preceding claim wherein the sunflower seed milk is a vegetable seed milk obtained from sunflower seed with or without one or more other oil seeds.

6. A method for producing a sunflower seed milk product characterized in that sunflower seed milk is fermented by means of lactic acid bacteria.

7. A method according to claim 6 characterized in that the fermentation is carried out at a temperature of from 35° to 50°C for 3 to 20 hours.

8. A method according to claim 6 or 7 wherein the lactic acid bacteria are selected from *Lactobacillus acidophilus, Lactobacillus bulgaricus, Streptococcus thermophilus* and *Streptococcus lactis*.

9. A method according to any of claims 6 to 8 wherein the fermented milk is mixed with additive selected from acidic drinks and organic acids, gelling agent or stabiliser (e.g. one or more of pectin, agar, carrageenan and gelatin) optionally being added before or after fermentation.

10. A method according to any of claims 6 to 9 wherein the sunflower seed milk is made from sunflower seeds with or without other oil seed and optionally has milk protein added thereto.

### Patentansprüche

1. Mit Milchsäurebakterien fermentierte Sonnenblumensamenmilch.

2. Fermentiertes Milchprodukt nach Anspruch 1, das wenigstens ein Additiv enthält, ausgewählt aus sauren Getränken und organischen Säuren.

3. Fermentiertes Milchprodukt nach Anspruch 1 oder 2, das ein Stabilisierungsmittel oder Gelierungsmittel enthält, vorzugsweise ausgewählt aus Pectin, Agar, Carrageenan und Gelatine.

4. Fermentiertes Milchprodukt nach einem der vorhergehenden Ansprüche, das Milchprotein, vorzugsweise bis zu einem Maximum von 15%, enthält.

5. Fermentiertes Milchprodukt nach einem der vorhergehenden Ansprüche, wobei die Sonnenblumensamenmilch eine pflanzliche Samenmilch ist, die erhalten wird von Sonnenblumensamen mit oder ohnen einem óder mehreren anderen Ölsamen.

6. Verfahren zur Herstellung eines Sonnenblumensamenmilchproduktes, dadurch gekennzeichnet, daß Sonnenblumensamenmilch mittels Milchsäurebakterien fermentiert wird.

7. Verfahren nach Anspruch 6, dadurch gekennzeichnet, daß die Fermentierung bei einer Temperatur von 35 bis 50°C während 3 bis 20 Stunden durchgeführt wird.

8. Verfahren nach Anspruch 6 oder 7, dadurch gekennzeichnet, daß die Milchsäurebakterien ausgewählt werden aus Lactobacillus acidophilu, Lactobacillus blugaricus, Streptococcus thermophilus und Streptococcus lactis.

9. Verfahren nach einem der Ansprüche 6 bis 8, dadurch gekennzeichnet, daß die fermentierte Milch mit einem Additiv vermischt wird, ausgewählt aus sauren Getränken und organischen Säuren, Gelierungsmitteln oder Stabilisierungsmitteln (beispielsweise einem oder mehreren der Bestandteile Pectin, Agar, Carrageenan und Gelatine), wobei die Zusätze gegebenenfalls vor oder nach der Fermentierung zugesetzt werden.

10. Verfahren nach einem der Ansprüche 6 bis 9, dadurch gekennzeichnet, daß die Sonnenblumensamenmilch hergestellt wird aus Sonnenblumensamen mit oder ohne anderem Ölsamen und gegebenenfalls ein Milchprotein zugesetzt wird.

### Revendications

1. Un lait de graines de tournesol fermenté par des bactéries produisant de l'acide lactique.

2. Produit fermenté de lait suivant la revendication 1, comprenant au moins un additif choisi entre des boissons acides et des acides organiques.

3. Produit fermenté de lait suivant la revendication 1 ou 2, comprenant un agent stabilisant ou gélifiant, choisi de préférence entre la pectine, l'agaragar, la carraghénine et la gélatine.

4. Produit fermenté de lait suivant l'une quelconque des revendications précédentes, contenant une protéine de lait, de préférence jusqu'à une concentration maximale de 15%.

5. Produit fermenté de lait suivant l'une quelconque des revendications précédentes, dont le lait de graines de tournesol est un lait de graines végétales obtenu à partir de graines de tournesol additionnées ou non d'une ou plusieurs autres graines oléagineuses.

6. Procédé d'obtention d'un produit de lait de graines de tournesol, caractérisé en ce que du lait de graines de tournesol est fermenté au moyen de bactéries produisant de l'acide lactique.

7. Procédé suivant la revendication 6, caractérisé en ce que la fermentation est conduite à une température de 35 à 50°C pendant 3 à 20 heures.

8. Procédé suivant la revendication 6 ou 7, dans lequel les bactéries produisant de l'acide lactique sont choisies entre *Lactobacillus acidophilus, Lactobacillus bulgaricus, Streptococcus thermophilus* et *Streptococcus lactis*.

9. Procédé suivant l'une quelconque des revendications 6 à 8, dans lequel le lait fermenté est mélangé avec un additif choisi entre des boissons acides et des acides organiques, un agent gélifiant ou stabilisant (par exemple une ou plusieurs substances telles que pectine, agaragar, carraghénine et gélatine) étant éventuellement ajouté avant ou après la fermentation.

10. Procédé suivant l'une quelconque des revendications 6 à 9, dans lequel le lait de graines de tournesol est préparé à partir de graines de tournesol avec ou sans autres graines oléagineuses et est éventuellement additionné de protéine de lait.